(19) **Europäisches Patentamt / European Patent Office / Office européen des brevets**

(11) **EP 2 943 771 B1**

(12) **FASCICULE DE BREVET EUROPEEN**

(45) Date de publication et mention
de la délivrance du brevet:
**18.09.2019 Bulletin 2019/38**

(21) Numéro de dépôt: **14703125.6**

(22) Date de dépôt: **10.01.2014**

(51) Int Cl.:
**G01N 17/00** *(2006.01)*     *G02B 5/08* *(2006.01)*
*G01N 21/25* *(2006.01)*     *G01N 21/84* *(2006.01)*

(86) Numéro de dépôt international:
**PCT/FR2014/050037**

(87) Numéro de publication internationale:
**WO 2014/108644 (17.07.2014 Gazette 2014/29)**

(54) **PROCEDE DE SURVEILLANCE DE LA DEGRADATION D'UN MIROIR**

VERFAHREN ZUR DEGRADATIONSÜBERWACHUNG EINES SPIEGELS

METHOD FOR MONITORING THE DEGRADATION OF A MIRROR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.01.2013 FR 1350238**

(43) Date de publication de la demande:
**18.11.2015 Bulletin 2015/47**

(73) Titulaire: **Commissariat à l'Energie Atomique et
aux Energies
Alternatives
75015 Paris (FR)**

(72) Inventeurs:
• **DELORD, Christine
73190 Challes-les-eaux (FR)**
• **BOUQUET, Céline
73000 Chambery (FR)**
• **COUTURIER, Raphaël
38360 Sassenage (FR)**
• **RACCURT, Olivier
38730 Chelieu (FR)**

(74) Mandataire: **Cabinet Beaumont
4, Place Robert Schuman
B.P. 1529
38025 Grenoble Cedex 1 (FR)**

(56) Documents cités:
EP-A2- 0 732 579    WO-A1-03/033426
DE-A1- 2 945 780    US-A1- 2009 034 235
US-B1- 6 208 423

**Description**

La présente demande de brevet revendique la priorité de la demande de brevet français FR13/50238.

Domaine

La présente demande concerne un procédé de surveillance du vieillissement et de la dégradation d'un miroir.

Exposé de l'art antérieur

Les centrales de production d'énergie à partir du rayonnement solaire sont généralement prévues pour concentrer l'énergie solaire en un point. L'énergie solaire concentrée peut être ensuite transformée en chaleur, par exemple en concentrant l'énergie sur un fluide à chauffer, ou en électricité, notamment dans le cas de centrales solaires à concentration.

Dans des centrales de production d'énergie à partir du rayonnement solaire, l'énergie solaire est concentrée par des réflecteurs, constitués notamment de miroirs concentrateurs. De nombreux types de miroirs concentrateurs présentant des formes et/ou des structures distinctes sont connus. Un type de miroir couramment utilisé comprend une couche réfléchissante protégée du côté de la face avant (du côté de la réflexion de la lumière) par une couche transparente, par exemple de verre.

Généralement, la couche réfléchissante est protégée en face arrière par au moins une couche de protection. Cette structure est commune aux miroirs concentrateurs dits de "première génération", c'est-à-dire des miroirs dans lesquels la structure de protection en face arrière contient du plomb et/ou du cuivre, et les miroirs concentrateurs dits de "deuxième génération", dans lesquels l'utilisation de plomb et/ou de cuivre dans la structure de protection en face arrière est réduite, voire nulle.

Actuellement, la durabilité des miroirs est caractérisée par leur fonction première qui est la réflectivité solaire spéculaire. Pour caractériser le vieillissement des miroirs, la réflectivité spéculaire est régulièrement mesurée au cours des vieillissements, par exemple à l'aide d'un spectrophotomètre portatif. Un miroir est généralement considéré comme défaillant lorsque sa réflectivité a chuté de 10 % par rapport à sa réflectivité initiale.

Un inconvénient d'un tel procédé est qu'il ne permet aucune anticipation d'une baisse de réflectivité du miroir.

Résumé

Un mode de réalisation de la présente invention prévoit un procédé de surveillance d'un miroir selon la revendication 1.

Selon un mode de réalisation, la deuxième couche est une couche métallique.

Selon un mode de réalisation, la troisième couche est en verre.

Selon un mode de réalisation, la première couche est une couche à base d'une matrice polymère.

Selon un mode de réalisation, la première couche est une couche à base d'une matrice polymère chargée.

Selon un mode de réalisation, l'étape de mesure est réalisée en outre sur au moins un deuxième et un troisième empilements identiques au premier empilement, l'évolution des mesures étant analysée tandis que les premier, deuxième et troisième empilements sont placés sous des conditions extérieures distinctes.

Selon un mode de réalisation, les conditions extérieures distinctes sont des conditions distinctes de température.

Selon un mode de réalisation, l'étape d'analyse comprend une étape de détermination d'une courbe théorique associée à la ou aux évolutions.

Selon un mode de réalisation, l'étape d'analyse comprend en outre une étape de vérification du fait que les évolutions des mesures correspondent à des mécanismes identiques de dégradation.

Selon un mode de réalisation, l'étape de vérification comprend une étape de calcul de l'énergie d'activation pour chacune des évolutions des mesures.

Selon un mode de réalisation, l'étape d'analyse comprend en outre une étape de détermination d'un temps caractéristique associé à chacune des évolutions des mesures.

Selon un mode de réalisation, l'étape d'analyse comprend en outre une étape de détermination du temps caractéristique du mécanisme de dégradation de la deuxième couche pour toute condition extérieure.

Selon un mode de réalisation, l'étape d'analyse comprend en outre une étape de détermination de la durée de vie théorique de l'empilement pour toute condition extérieure.

Un mode de réalisation prévoit en outre un procédé d'anticipation de la dégradation d'une deuxième couche d'un empilement de trois couches en utilisation, comprenant : réaliser le procédé ci-dessus sur au moins un échantillon d'empilement ; mesurer la couleur de la première couche de l'empilement en utilisation ; et déclencher une alerte lorsque la couleur dépasse un seuil.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente, en vue en coupe, une structure d'un miroir concentrateur dont on cherche à surveiller le vieillissement ;
la figure 2 est une courbe de la réflectivité d'un miroir concentrateur du type de la figure 1 en fonction du temps ;
la figure 3 illustre un miroir dégradé ;
la figure 4 illustre la norme dite "Lab" de la Commission Internationale de l'Energie ;
la figure 5 est un schéma sous forme de blocs d'un procédé selon un mode de réalisation ;
la figure 6 illustre le résultat de mesures de l'évolution de la réflectivité d'un exemple de miroir en fonction de l'évolution de couleur d'une couche de protection en face arrière du miroir lors de vieillissements du miroir sous des contraintes de températures différentes ;
la figure 7 illustre une courbe de l'évolution d'un paramètre ΔE caractérisant la couleur d'une couche de protection en face arrière d'un exemple de miroir en fonction du temps lors de vieillissements du miroir sous des contraintes de températures différentes ;
la figure 8 illustre la représentation d'Arrhenius pour un exemple de miroir ; et
la figure 9 est une courbe prévisionnelle obtenue à l'aide d'un procédé selon un mode de réalisation illustrant le temps de vie d'un exemple de miroir en fonction de la température de fonctionnement de celui-ci.

Par souci de clarté, de mêmes éléments ont été désignés par de mêmes références aux différentes figures.

Description détaillée

Dans l'ensemble de cette description, on notera que les expressions "surveillance du vieillissement d'un miroir" ou "surveillance de la dégradation d'un miroir" seront utilisées aussi bien pour couvrir des étapes permettant de caractériser théoriquement la durée de vie du miroir que des étapes permettant un suivi sur site de production (en temps réel) de l'état de vieillissement et de dégradation du miroir.

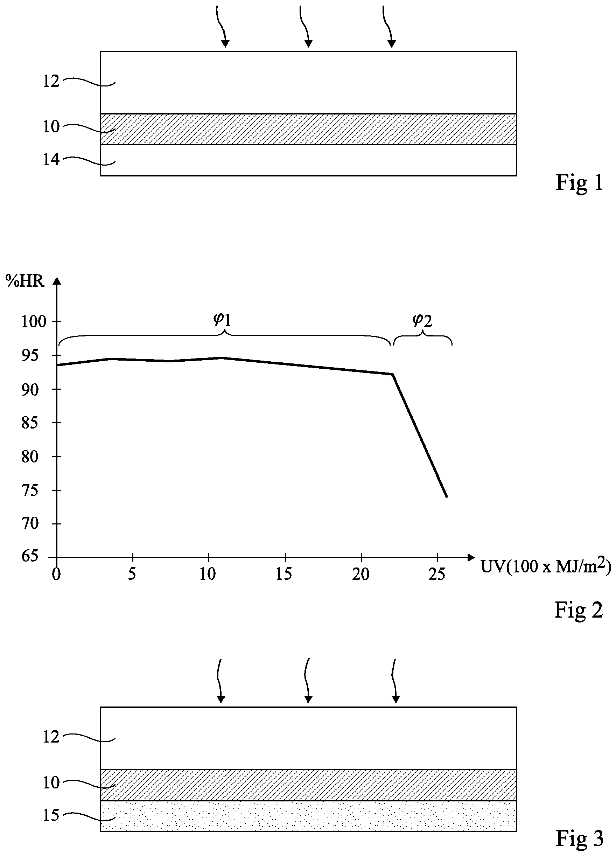

La figure 1 représente, en vue en coupe, la structure d'un miroir, par exemple d'une centrale de production d'énergie à partir du rayonnement solaire, que l'on considère ici. On notera que, en pratique, les miroirs concentrateurs peuvent avoir une coupe du type de celle de la figure 1, que ce soit des miroirs concentrateurs plans ou présentant une forme générale en portion de sphère ou de parabole.

En figure 1, le miroir comprend une couche réfléchissante 10, par exemple métallique, protégée sur la face avant (en haut en figure 1) par une couche de verre 12. A titre d'exemple, la couche 10 peut être une couche en argent. La face arrière de la couche réfléchissante 10 (en bas en figure 1) est quant à elle protégée par une couche de protection 14. De façon classique, la couche de protection 14 peut comprendre au moins une couche formée par une matrice polymère éventuellement chargée, par exemple avec des charges métalliques telles que le plomb, ou des charges oxydes ($TiO_2$, ZnO, $BaSO_4$, ...). La couche de protection peut être constituée d'une unique couche ou d'un empilement multicouche. A titre d'exemple d'empilement multicouche, la couche de protection 14 peut comprendre une matrice polymère à base d'alkydes-mélamines pour la ou les couches disposées près de la couche réflectrice 10, et une couche de type acrylique pour la couche externe destinée à être en contact avec l'environnement extérieur. La couche de protection 14 peut également être constituée d'un matériau composite, comprenant un matériau organique telle qu'une matrice polymère ainsi qu'un matériau inorganique, ledit matériau hybride étant alors avantageusement déposé par un procédé sol-gel. C'est par exemple le cas pour les miroirs haute température commercialisés par la société Guardian Industries Corp ("EcoGuard® Solar Boost High Temperature concentrating mirrors"). On notera que les portions apparentes de la couche 10, sur le contour du miroir, peuvent en pratique être protégées par une extension de la couche de protection 14. Les miroirs que l'on considère ici sont de deuxième génération, c'est-à-dire qu'ils ne comprennent pas ou très peu de plomb.

Historiquement, les miroirs étaient positionnés sur des supports, ces supports permettant, outre l'orientation des miroirs, la protection de leurs faces arrière. L'apparition de miroirs fins, tels que des miroirs de Fresnel, et la volonté de former des dispositifs légers, a permis l'intégration de miroirs montés par exemple sur des bras articulés. La face arrière de ces miroirs est ainsi en contact direct avec l'environnement extérieur, et est soumise à des agressions de cet environnement. L'intensité de ces agressions dépend notamment de la température, du degré d'humidité, de la quantité de rayons ultraviolets, etc.

La figure 2 est une courbe de la réflectivité d'un miroir hémisphérique constitué d'un empilement tel que celui de la figure 1 en fonction de la quantité de rayons ultraviolets qu'il reçoit, c'est-à-dire au cours du temps.

On remarque dans la courbe de la figure 2 que la réflectivité du miroir est relativement constante pendant une

première phase (φ1), avant de s'écrouler brutalement dans une deuxième phase (φ2). Comme on l'a vu précédemment, on considère généralement qu'un miroir concentrateur n'est plus rentable, et donc à remplacer, lorsqu'il perd entre 5 et 15 % de réflectivité, généralement 10 %.

Actuellement, la surveillance simple de la réflectivité des miroirs sur site et en laboratoire ne permet pas d'anticiper la dégradation des miroirs puisque la phase φ2 de dégradation de la réflectivité intervient relativement soudainement et brutalement.

La figure 3 illustre la dégradation d'un miroir de deuxième génération tel que celui de la figure 1 lorsqu'il est soumis à des agressions par la face arrière.

Comme on le voit dans cette figure, la couche de protection 14 formée sur la face arrière du miroir, qui est en contact avec l'environnement extérieur, est progressivement attaquée depuis sa face en contact avec l'air, ce qui la transforme en une couche poreuse 15. La couche 15 obtenue ne joue donc plus son rôle de barrière de protection contre l'oxydation de la couche réfléchissante 10. Une fois la couche 14 dégradée et remplacée par une couche poreuse 15, la couche réfléchissante 10 est à son tour attaquée, ce qui déclenche la perte de réflectivité du miroir (phase φ2).

On prévoit ici une méthode permettant de surveiller le vieillissement de miroirs tels que celui de la figure 1 et soumis à des attaques ou des agressions depuis la face arrière. Notamment, cette méthode permet de déterminer ou d'estimer la durée de vie de tels miroirs de façon accélérée, et permet un suivi en temps réel du degré de vieillissement de ceux-ci.

Pour parvenir à cette méthode, les inventeurs ont noté que la dégradation de la couche de protection dans la phase φ1 est directement liée à la perte de réflectivité du miroir dans la phase φ2, aux températures usuelles d'exploitation. Ils ont en outre remarqué qu'une dégradation de la couche de protection, quelle que soit sa structure, et notamment lorsque celle-ci comporte au moins une couche à base d'une matrice polymère, peut être étudiée par colorimétrie. On peut ainsi prévenir la perte de réflectivité du miroir par l'étude de l'évolution de la couleur de la couche de protection.

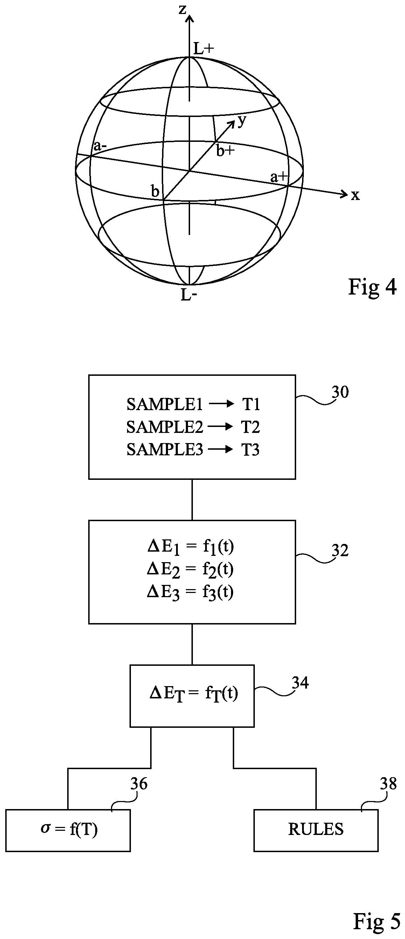

La figure 4 illustre des paramètres de colorimétrie susceptibles d'être utilisés dans le procédé selon un mode de réalisation.

Plus particulièrement, la figure 4 illustre une norme de colorimétrie connue sous l'appellation "Lab", définie par la Commission Internationale de l'Energie (CIE). Cette norme permet de caractériser la couleur à l'aide de trois paramètres, un paramètre L correspondant à la luminance, et deux paramètres a et b caractérisant la chrominance de la couleur.

Comme cela est décrit dans cette figure en trois dimensions, la luminance est représentée selon la direction d'un axe z (paramètre L), et la chrominance est caractérisée par deux coordonnées selon les axes x (paramètre a) et y (paramètre b). Les valeurs de L varient entre L = 0 pour le noir et L = 100 pour le blanc, les valeurs de a varient d'une valeur minimale négative pour le vert à une valeur maximale positive pour le rouge, et les valeurs de b varient d'une valeur minimale négative pour le bleu à une valeur maximale positive pour le jaune.

On prévoit ici de caractériser l'évolution de couleur de la couche de protection à l'aide d'un paramètre de variation de couleur ΔE défini par :

$$\Delta E = \sqrt{\left(L_{ref} - L\right)^2 + \left(a_{ref} - a\right)^2 + \left(b_{ref} - b\right)^2}$$

$L_{ref}$ et L étant, respectivement, les valeurs initiale et courante de la luminance de la couche de protection, $a_{ref}$ et a étant, respectivement, les valeurs initiale et courante de la première variable de chrominance a de la couche de protection et $b_{ref}$ et b étant, respectivement, les valeurs initiale et courante de la deuxième variable de chrominance b de la couche de protection.

On notera que l'échelle de colorimétrie présentée ici n'est qu'un exemple, et que d'autres échelles de mesure de la colorimétrie de la couche de protection pourront être utilisées en remplacement de celle-ci.

La figure 5 est un diagramme sous forme de blocs d'un procédé de surveillance de la dégradation d'une couche selon un mode de réalisation.

On prévoit ici de caractériser le vieillissement d'un miroir en fonction de la température, paramètre qui influence ce vieillissement. En effet, des miroirs concentrateurs de centrales solaires sont soumis à des variations de températures importantes dans la journée, ce qui participe au vieillissement des miroirs. On notera que des procédés similaires à celui proposé ici pourront être mis en place pour étudier l'influence d'autres paramètres accélérant la dégradation des miroirs, par exemple le degré d'humidité ou la dose d'ultraviolets reçue.

Dans une première étape 30 du procédé, qui peut être mise en oeuvre en parallèle d'une mesure réelle sur site, on prévoit de placer différents échantillons de structures identiques à celle du miroir que l'on va considérer sur site dans des conditions environnementales différentes, dans notre exemple détaillé sous des températures différentes. Dans l'exemple représenté en figure 5, on prévoit trois échantillons, SAMPLE1, SAMPLE2 et SAMPLE3 que l'on place respectivement dans des enceintes à des températures distinctes T1, T2 et T3, et similaires par ailleurs. On peut ainsi réaliser les mesures pour deux des trois échantillons et réaliser une extrapolation pour le troisième échantillon.

Pour mettre en oeuvre ce procédé, un minimum de trois échantillons, soumis à des vieillissements accélérés à des températures distinctes, est préférable. On notera que l'utilisation de moins de trois échantillons pourra également permettre une estimation de caractéristiques de la dégradation des miroirs.

On pourra également prévoir plusieurs échantillons de miroir pour chaque température de vieillissement accéléré T1, T2, T3, pour assurer une mesure moyenne et un comportement de dégradation les plus précis possibles. On peut par exemple prévoir un ensemble de trois échantillons pour chaque température de vieillissement accéléré.

Les températures T1, T2 et T3 seront choisies de façon à ce que les mécanismes de dégradation des matériaux constituant le miroir soient similaires à ceux rencontrés en environnement naturel. En particulier, ces températures seront choisies comme étant inférieures aux températures de transition vitreuse de la partie organique et de décomposition des charges et pigments présents dans les peintures ou couches de protections, afin d'obtenir les mêmes phénomènes de dégradation que ceux obtenus dans les conditions d'exploitation. Si elles sont inconnues, ces températures de dégradation peuvent être déterminées par des mesures par Analyse Thermogravimétrique (ATG) ou Analyse Calorimétrique Différentielle (DSC).

A une étape 32, on prévoit de tracer, pour chacun des échantillons SAMPLE1, SAMPLE2, SAMPLE3, la valeur de la différence de couleur $\Delta E$ de la couche protectrice en face arrière de l'échantillon, par rapport à la couleur initiale, en fonction du temps ($\Delta E_1 = f_1$ (t), $\Delta E_2 = f_2$ (t) et $\Delta E_3 = f_3(t)$).

Comme nous le verrons ci-après, la détermination de plusieurs évolutions de couleur au cours du temps permet d'obtenir une formule générique de la différence de couleur en fonction du temps (étape 34, $\Delta E_T = f_T(t)$).

Ensuite, on vérifie que les courbes obtenues sur les différents échantillons correspondent à des phénomènes de dégradation similaires, par exemple en calculant l'énergie d'activation des phénomènes de dégradation pour chacun des échantillons. Si ce test est validé, la suite du procédé continue. Si au moins un test sur un échantillon n'est pas lié au même phénomène de dégradation que les autres tests, un nouveau test, sur un échantillon à une température inférieure à la température maximale des premiers tests, peut s'avérer nécessaire.

Une fois la détermination de l'équation à l'étape 34, et la validation de cohérence du phénomène de dégradation, réalisées, on peut déterminer une durée de vie théorique $\sigma$ d'un miroir en fonction de la température d'utilisation ($\sigma = f(T)$, étape 36), ainsi que des règles de surveillance du vieillissement du miroir en temps réel (RULES, étape 38), comme cela sera décrit en détail sur un exemple illustratif ci-après.

Dans la suite de la description, le procédé de la figure 5 sera décrit en détail sur un exemple particulier de miroir, à savoir le miroir commercialisé par AGC sous la dénomination commerciale "Sun Mirox". Dans ce miroir, la couche réfléchissante 10 est en argent et est protégée du côté de la face arrière par une couche de protection 14 comprenant un empilement de deux couches de peinture.

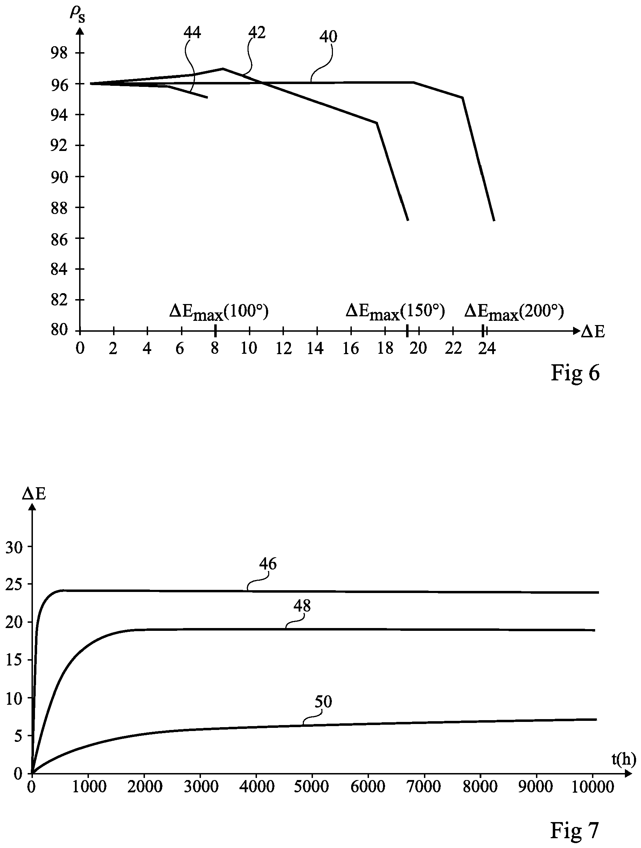

La figure 6 illustre le résultat de mesures du vieillissement accéléré d'un tel miroir sous des contraintes de températures différentes. Dans cette figure est illustrée, pour trois échantillons du miroir, l'évolution de la réflectivité spéculaire à 8° ($\rho_s$) du miroir en fonction de la variation de couleur ($\Delta E$) de la couche de protection. En particulier, il est représenté dans cette figure une première courbe 40 pour un vieillissement accéléré du miroir à une température de 200°C, une deuxième courbe 42 pour un vieillissement accéléré du miroir à une température de 150°C et une troisième courbe 44 pour un vieillissement accéléré du miroir à une température de 100°C.

Comme on peut le voir dans cette figure, au moins pour les mesures qui sont réalisées à 150°C et 200°C, la couleur de la couche de protection en face arrière du miroir évolue de façon mesurable avant l'apparition de la baisse de réflectivité. Ceci est compatible avec l'hypothèse faite que l'environnement extérieur dégrade dans un premier temps la ou les couches de protection 14, puis dégrade dans un deuxième temps, une fois la ou les couches de protection 14 fortement dégradées, la couche réfléchissante 10.

On notera que, dans l'exemple représenté, la mesure de la courbe 44 à une température de vieillissement de 100°C est incomplète en ce que la phase de dégradation de la réflectivité du miroir n'est pas encore intervenue en fin de tracé. Ceci est dû à une période de mesure insuffisante pour arriver à la deuxième étape $\varphi 2$ de dégradation du miroir. La mesure à cette température est cependant utilisable pour caractériser le phénomène de dégradation qui lui est associé.

La figure 7 illustre une courbe (étape 32) de l'évolution de la couleur ($\Delta E$) en fonction du temps t, en heures, pour les mêmes échantillons que ceux utilisés pour le tracé de la figure 6. Une première courbe 46 illustre ainsi l'évolution de couleur pour une température de vieillissement accéléré de 200°C, une deuxième courbe 48 illustre cette évolution pour une température de vieillissement accéléré de 150°C et une troisième courbe 50 illustre cette évolution pour une température de vieillissement accéléré de 100°C.

En analysant la forme de ces courbes, par exemple à l'aide d'un logiciel de reconnaissance de courbes adapté (un logiciel assurant des fonctions de régression de courbes, par exemple Origin, proposé par OriginLab, Kaleïdagraph, Igor ou encore Matlab ou Scilab), les inventeurs ont déterminé que l'évolution de couleur $\Delta E$ en fonction du temps est de la forme :

$$\Delta E_T\big(t\big) = \Delta E_{max\ T}\left(1 - \exp\left(-\frac{t}{\tau(T)}\right)\right),$$

$\Delta E_{max\ T}$ étant une constante associée à chaque température T, qui correspond à la valeur asymptotique de la variable $\Delta E$, $\tau$ (T) étant une constante de temps qui dépend également de la température de vieillissement accéléré.

En appliquant cette équation aux mesures réalisées pour le ou les échantillons soumis à une température de 100°C, et en tirant profit des premières mesures réalisées sur ce ou ces échantillons, on peut déterminer la valeur de $\Delta E_{max100°C}$ ainsi que la valeur de $\tau$ (100°C). Les valeurs de $\Delta E_{max200°C}$, $\Delta E_{max150°C}$ et $\Delta E_{max100°C}$ sont illustrées en figure 6.

Pour valider l'hypothèse que la dégradation des miroirs provient d'un même phénomène dans les trois mesures de test, les inventeurs ont rapproché l'équation ci-dessus $\Delta E_T(t)$ en fonction du temps avec une équation de diffusion dans un matériau, du type :

$$D = D_0 \exp\left(-\frac{E_a}{k_B T}\right),$$

D étant le coefficient de diffusion, $D_0$ le coefficient de diffusion maximum, dépendant de la fréquence de vibration dans les molécules et de la mobilité de l'espèce diffusante, $E_a$ étant l'énergie d'activation de la réaction, $k_B$ la constante de Boltzmann, et T la température.

Dans un phénomène de diffusion, le coefficient de diffusion D est directement proportionnel à l'inverse d'un temps caractéristique de la réaction, représentatif d'une longueur de diffusion. On peut donc remplacer D par $1/\tau$ dans l'équation ci-dessus, ce qui permet d'obtenir :

$$\frac{1}{\tau} = \frac{1}{\tau_0} \exp\left(-\frac{E_a}{k_B T}\right).$$

Pour les trois températures d'étude, les courbes représentant la loi de diffusion théorique reproduisent de façon satisfaisante l'allure des courbes expérimentales (figure 7).

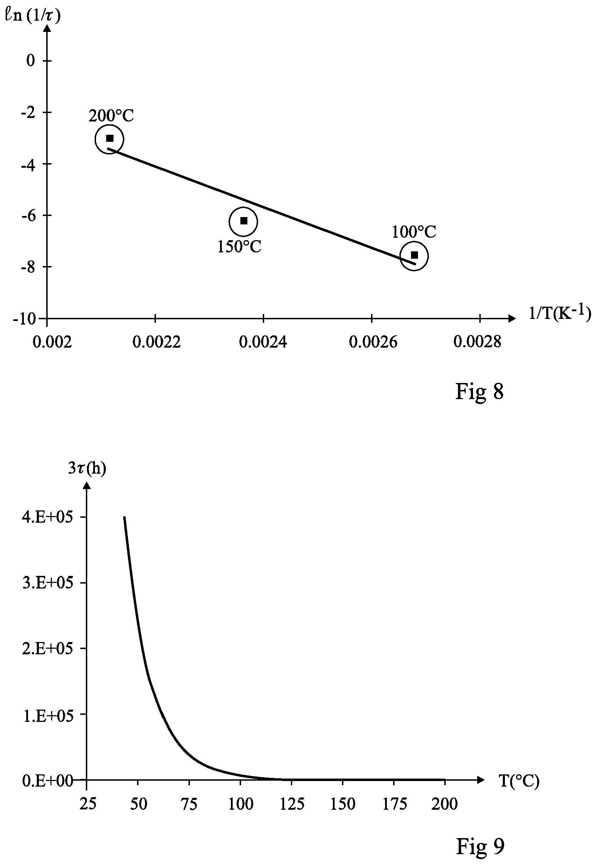

La figure 8 illustre une représentation graphique du logarithme de $1/\tau$ en fonction de $1/T$, qui correspond à la représentation d'Arrhenius du mécanisme de diffusion. Cette courbe permet d'estimer l'énergie d'activation $E_a$ caractéristique du mécanisme impliqué pour les trois mesures de test. La valeur trouvée dans le cas d'étude présenté (0,7 eV) correspond bien à un phénomène de diffusion, et ce mécanisme est commun aux trois mesures (en figure 8, les trois points de mesure sont alignés). Cette courbe valide donc bien l'hypothèse d'un phénomène de diffusion qui dégrade la couche de protection en face arrière (et dans un deuxième temps la couche réfléchissante), et valide l'utilisation des résultats des mesures de test pour caractériser le vieillissement en pratique.

On notera que, si cette détermination n'est pas concluante, c'est-à-dire que l'on détermine qu'au moins une des mesures de vieillissement accéléré a engendré des phénomènes distincts des phénomènes impliqués par les deux autres mesures de vieillissement accéléré, deux solutions sont possibles : soit on considère que les deux mesures aux températures les plus basses (les plus proches du cas réel) sont cohérentes avec les mesures qui sont réalisées sur site et on caractérise le mécanisme de dégradation à partir de ces deux mesures ; soit on réalise une nouvelle mesure de test sur un nouvel échantillon, à une température inférieure à la température la plus importante du premier essai.

Pour obtenir la durée de vie d'un miroir ($\sigma$ = f(T), étape 36), on peut estimer que le régime stationnaire d'un mécanisme ou réaction est atteint pour un temps très supérieur au temps caractéristique $\tau$. On peut par exemple prévoir ici de prendre comme hypothèse un temps de dégradation des peintures égal à trois fois la valeur du temps caractéristique $\tau$ pour être assez proche de l'asymptote de la courbe.

La figure 9 illustre l'évolution de cette durée de vie $\sigma$ du miroir en fonction de la température de vieillissement. Cette représentation, obtenue à partir des mesures réalisées sur les échantillons de test soumis à un vieillissement accéléré, permet d'estimer la durée de vie du miroir pour n'importe quelle température de vieillissement.

On notera que le terme "durée de vie du miroir" correspond à la durée pendant laquelle la couche de protection protège la couche réfléchissante du miroir. Cette durée est du même ordre de grandeur que la durée de vie de la couche de protection, puisque lorsque celle-ci est dégradée, l'oxygène de l'air dégrade très rapidement la réflectivité du miroir (plus rapidement que la dégradation de la couche de protection) et la réflectivité chute brutalement.

Ces mesures permettent par exemple de prédire que la réflectivité des miroirs vieillis à 100°C commencera à baisser au bout d'un an environ : à 100°C, il faut un an pour que la ou les couches de protection soient dégradées et pour que l'oxygène de l'air diffuse jusqu'à la couche réfléchissante, faisant baisser la réflectivité du miroir.

Pour anticiper une perte de réflectivité des miroirs, on peut ainsi prévoir de remplacer les miroirs lorsqu'ils ont atteint leur durée de vie théorique (3τ), par exemple à la température moyenne d'utilisation sur une période donnée.

On peut également prévoir, une fois la phase de test sur les échantillons terminée, de faire un suivi en temps réel par colorimétrie du degré de vieillissement de miroirs sur site de production, c'est-à-dire en utilisation.

Comme on l'a vu précédemment, les différences de couleur asymptotiques $\Delta E_{maxT}$ ne sont pas identiques pour toutes les températures de vieillissement. Ainsi, on ne peut conclure directement, à partir d'une différence de couleur actuelle un degré de vieillissement du miroir ; il faudrait prendre en compte l'historique de la température subie par le miroir pour faire ce rapprochement.

Pour faire le suivi en temps réel sur site (étape 36), et anticiper une perte de réflectivité du miroir à l'aide de l'information de la différence de couleur de la face arrière du miroir, plusieurs méthodes peuvent être utilisées.

On peut notamment prévoir de tracer en temps réel la courbe de l'évolution de la couleur de la couche de protection du miroir en fonction du temps, et estimer, au vu de l'expression théorique de cette courbe, les valeurs de $\Delta E_{max}$ et de τ. En effet, l'influence d'autres paramètres de l'environnement extérieur étant moindre que celle du paramètre température, on peut assimiler la courbe obtenue sur site à une courbe théorique du type de celle proposée ci-dessus. La détermination de ces paramètres permet d'obtenir une durée de vie théorique du miroir, mais également de déterminer, pour le miroir, la courbe d'évolution de la réflectivité en fonction de la différence de couleur, et donc d'anticiper le remplacement de celui-ci lorsque la différence de couleur par rapport à la couleur initiale dépasse un seuil (avant la baisse de réflectivité).

On peut également prévoir de tracer en temps réel la courbe de l'évolution de la couleur de la couche de protection du miroir en fonction du temps, et prévoir la détection du point d'inflexion de cette courbe, le temps écoulé jusqu'à ce point d'inflexion correspondant à τ. Cette méthode permet d'obtenir une durée de vie (3.τ) du miroir sur site, et les paramètres $\Delta E_{max}$ et τ liant différence de couleur et réflectivité.

Des modes de réalisation particuliers ont été décrits. Diverses variantes et modifications apparaîtront à l'homme de l'art. En particulier, on notera que les modes de réalisation proposés ici s'appliquent non seulement aux miroirs de concentrateurs solaires, mais également à tout type de miroir de deuxième génération comprenant une couche réfléchissante protégée du côté de la face avant par une couche transparente, par exemple par une plaque de verre, et protégée du côté de la face arrière par une couche de protection, dans lequel la couleur de la couche de protection peut être suivie (face arrière du miroir accessible), et pour lequel on cherche à déterminer la durée de vie et/ou suivre en temps réel le vieillissement. Plus généralement, les modes de réalisation proposés ici s'appliquent à l'étude de la dégradation d'une deuxième couche d'un empilement par étude colorimétrique d'une première couche de cet empilement.

Notamment, le suivi de la perte de réflectivité du miroir pourrait être substitué par d'autres propriétés, pour d'autres applications, telles que la conduction ou la fonction de barrière électromagnétique. Notamment, un tel procédé pourrait être appliqué à des pistes métalliques encapsulées dans un polymère ou noyées dans un vernis de protection contre l'oxydation : si le vernis se dégrade, le suivi de son changement de couleur peut être un moyen d'anticiper le vieillissement de la couche de métal sous-jacente et donc de modifier ses propriétés (conductivité par exemple).

En outre, on notera que bien que l'on ait décrit un mode de réalisation préféré dans lequel le procédé prévoit trois mesures de référence sous des conditions environnementales distinctes pour caractériser le vieillissement et la dégradation du miroir, et donc des couches de protection et réfléchissante, on pourra également prévoir de tirer profit d'une seule mesure de référence. Notamment, si cette mesure est réalisée à une température supérieure mais proche des températures d'utilisation, on pourra considérer directement que le régime de dégradation du miroir de référence est identique au régime de dégradation des miroirs sur site et tirer profit de cette mesure de référence et des premières mesures en utilisation pour obtenir l'ensemble des informations du vieillissement des miroirs (durée de vie en fonction de la température et lien entre colorimétrie et vieillissement pour toute température).

Divers modes de réalisation avec diverses variantes ont été décrits ci-dessus. On notera que l'homme de l'art pourra combiner divers éléments de ces divers modes de réalisation et variantes sans faire preuve d'activité inventive.

Le procédé proposé consiste donc avantageusement à mettre en place une méthodologie de caractérisation simple et peu coûteuse qui permette, sur site comme en laboratoire, d'anticiper la perte de réflectivité des miroirs et plus particulièrement des miroirs solaires en verre utilisés dans les centrales solaires à concentration. Ceci est obtenu par une caractérisation d'autres phénomènes que la perte de réflectivité spéculaire du miroir, et permet d'évaluer l'état d'avancement du vieillissement et d'estimer la durée de vie des miroirs dès les premiers signes de dégradation des couches de protection qui interviennent avant celle de la réflectivité.

**Revendications**

1. Procédé de surveillance d'un miroir comprenant un premier empilement comprenant une première couche (14), une deuxième couche réfléchissante (10) comprenant des première et deuxième faces opposées, la première face réfléchissant la lumière et la première couche recouvrant la deuxième face, et une troisième couche transparente au rayonnement solaire (12) formée sur la première face, le procédé comprenant les étapes suivantes :

mesurer (32) la couleur de la première couche (14) ; et
analyser (34, 36, 38) l'évolution de ladite mesure pour caractériser la dégradation de la deuxième couche (10).

2. Procédé selon la revendication 1, dans lequel la deuxième couche (10) est une couche métallique.

3. Procédé selon la revendication 1, dans lequel la troisième couche (12) est en verre.

4. Procédé selon l'une quelconque des revendications 1 à 3, dans lequel la première couche (14) est une couche à base d'une matrice polymère.

5. Procédé selon l'une quelconque des revendications 1 à 4, dans lequel la première couche (14) est une couche à base d'une matrice polymère chargée.

6. Procédé selon l'une quelconque des revendications 1 à 5, dans lequel l'étape de mesure est réalisée en outre sur au moins un deuxième et un troisième empilement identiques au premier empilement, l'évolution desdites mesures étant analysée tandis que les premier, deuxième et troisième empilements sont placés sous des conditions extérieures distinctes.

7. Procédé selon la revendication 6, dans lequel les conditions extérieures distinctes sont des conditions distinctes de température (T1, T2, T3).

8. Procédé selon l'une quelconque des revendications 1 à 7, dans lequel l'étape d'analyse comprend une étape de détermination d'une courbe théorique associée à ladite ou auxdites évolutions.

9. Procédé selon l'une quelconque des revendications 6 à 8, dans lequel l'étape d'analyse comprend en outre une étape de vérification du fait que lesdites évolutions desdites mesures correspondent à des mécanismes identiques de dégradation.

10. Procédé selon la revendication 9, dans lequel l'étape de vérification comprend une étape de calcul de l'énergie d'activation pour chacune desdites évolutions desdites mesures.

11. Procédé selon l'une quelconque des revendications 6 à 10, dans lequel l'étape d'analyse comprend en outre une étape de détermination d'un temps caractéristique (i) associé à chacune desdites évolutions desdites mesures.

12. Procédé selon la revendication 11, dans lequel l'étape d'analyse comprend en outre une étape de détermination du temps caractéristique du mécanisme de dégradation de la deuxième couche (10) pour toute condition extérieure.

13. Procédé selon la revendication 12, dans lequel l'étape d'analyse comprend en outre une étape de détermination de la durée de vie théorique dudit empilement pour toute condition extérieure.

14. Procédé d'anticipation de la dégradation d'une deuxième couche d'un empilement de trois couches en utilisation, comprenant :

réaliser le procédé selon l'une quelconque des revendications 1 à 13 sur au moins un échantillon dudit empilement ;
mesurer la couleur de la première couche de l'empilement en utilisation ; et
déclencher une alerte lorsque ladite couleur dépasse un seuil.

**Patentansprüche**

1. Verfahren zum Überwachen eines Spiegels, der einen ersten Stapel aufweist, der eine erste Schicht (14), eine zweite reflektierende Schicht (10) mit ersten und zweiten entgegengesetzten Oberflächen aufweist, wobei die erste Oberfläche Licht reflektiert und die erste Schicht die zweite Oberfläche bedeckt, und eine dritte Schicht aufweist, die für Sonnenstrahlung (12) transparent ist, die auf der ersten Oberfläche ausgebildet ist, wobei das Verfahren die folgenden Schritte aufweist:

Messen (32) der Farbe der ersten Schicht (14); und

Analysieren (34, 36, 38) der Variation bzw. Veränderung der Messung, um die Degeneration bzw. der Verschlechterung der zweiten Schicht (10) zu charakterisieren.

2. Verfahren nach Anspruch 1, wobei die zweite Schicht (10) eine Metallschicht ist.

3. Verfahren nach Anspruch 1, wobei die dritte Schicht (12) aus Glas hergestellt ist.

4. Verfahren nach einem der Ansprüche 1 bis 3, wobei die erste Schicht (14) eine Schicht basierend auf einer Polymermatrix ist.

5. Verfahren nach einem der Ansprüche 1 bis 4, wobei die erste Schicht (14) eine Schicht basierend auf einer gefüllten Polymermatrix ist.

6. Verfahren nach einem der Ansprüche 1 bis 5, wobei der Messschritt ferner auf wenigstens einem zweiten und einem dritten Stapel durchgeführt wird, die mit dem ersten Stapel identisch sind, wobei die Variation der Messungen analysiert wird, während der erste, zweite und dritte Stapel unter unterschiedlichen äußeren Bedingungen angeordnet werden.

7. Verfahren nach Anspruch 6, wobei die unterschiedlichen äußeren Bedingungen unterschiedliche Temperaturbedingungen (T1, T2, T3) sind.

8. Verfahren nach einem der Ansprüche 1 bis 7, wobei der Analyseschritt einen Schritt zum Bestimmen einer theoretischen Kurve aufweist, die der/den Variation(en) zugeordnet ist.

9. Verfahren nach einem der Ansprüche 6 bis 8, wobei der Analyseschritt ferner einen Schritt zum Verifizieren aufweist, ob die Variationen der Messungen identischen Degenerationsmechanismen entsprechen.

10. Verfahren nach Anspruch 9, wobei der Verifikationsschritt einen Schritt zum Berechnen der Aktivierungsleistung für jede der Variationen der Messungen aufweist.

11. Verfahren nach einem der Ansprüche 6 bis 10, wobei der Analyseschritt ferner einen Schritt zum Bestimmen einer charakteristischen Zeit (T) aufweist, die jeder der Variationen der Messungen zugeordnet ist.

12. Verfahren nach Anspruch 11, wobei der Analyseschritt ferner einen Schritt zum Bestimmen der Zeitcharakteristik des Degenerationsmechanismus der zweiten Schicht (10) für jede äußere Bedingung aufweist.

13. Verfahren nach Anspruch 12, wobei der Analyseschritt ferner einen Schritt zum Bestimmen der theoretischen Lebensdauer des Stapels für jede äußere Bedingung aufweist.

14. Verfahren zum Antizipieren der Degeneration einer zweiten Schicht eines Stapels von drei Schichten im Gebrauch, das folgendes aufweist:

Durchführen des Verfahrens nach einem der Ansprüche 1 bis 13 an wenigstens einer Probe des Stapels;
Messen der Farbe der ersten Schicht des Stapels bei der Verwendung; und
Auslösen eines Alarms, wenn die Farbe einen Schwellenwert überschreitet.

**Claims**

1. A method of monitoring a mirror comprising a first stack comprising a first layer (14), a second reflective layer (10) having first and second opposite surfaces, the first surface reflecting light and the first layer covering the second surface, and a third layer transparent to solar radiation (12) formed on the first surface, the method comprising the steps of:

measuring (32) the color of the first layer (14); and
analyzing (34, 36, 38) the variation of said measurement to characterize the degradation of the second layer (10).

2.  The method of claim 1, wherein the second layer (10) is a metal layer.

3.  The method of claim 1, wherein the third layer (12) is made of glass.

4.  The method of any of claims 1 to 3, wherein the first layer (14) is a layer based on a polymer matrix.

5.  The method of any of claims 1 to 4, wherein the first layer (14) is a layer based on a filled polymer matrix.

6.  The method of any of claims 1 to 5, wherein the measurement step is further carried out on at least one second and one third stacks identical to the first stack, the variation of said measurements being analyzed while the first, second, and third stacks are placed under different outside conditions.

7.  The method of claim 6, wherein the different outside conditions are different temperature conditions (T1, T2, T3).

8.  The method of any of claims 1 to 7, wherein the analysis step comprises a step of determining a theoretical curve associated with said variation(s).

9.  The method of any of claims 6 to 8, where the analysis step further comprises a step of verifying whether said variations of said measurements correspond to identical degradation mechanisms.

10. The method of claim 9, wherein the verification step comprises a step of calculating the activation power for each of said variations of said measurements.

11. The method of any of claims 6 to 10, wherein the analysis step further comprises a step of determining a characteristic time ($\tau$) associated with each of said variations of said measurements.

12. The method of claim 11, wherein the analysis step further comprises a step of determining the time characteristic of the mechanism of degradation of the second layer (10) for any outside condition.

13. The method of claim 12, wherein the analysis step further comprises a step of determining the theoretical lifetime of said stack for any outside condition.

14. A method of anticipating the degradation of a second layer of a stack of three layers in use, comprising:

    carrying out the method of any of claims 1 to 13 on at least one sample of said stack;
    measuring the color of the first layer of the stack in use; and
    triggering an alert when said color exceeds a threshold.

Fig 1

Fig 2

Fig 3

Fig 4

Fig 5

Fig 6

Fig 7

Fig 8

Fig 9

**RÉFÉRENCES CITÉES DANS LA DESCRIPTION**

**Documents brevets cités dans la description**

- FR 1350238